# EUROPEAN PATENT APPLICATION

(11) **EP 1 045 408 A1**
(43) Date of publication of application: **18.10.2000**
(21) Application number: 00102122.9
(22) Date of filing: 04.02.2000
(51) Int. Cl.: H01G 2/14

(54) **Overpressure explosion-preventing capacitor provided with double quick-coupling elastic contacts**

(30) Priority: 15.04.1999 IT BO990172
(71) Applicant: ITALFARAD S.p.A., 40061 Minerbio (Province of Bologna) (IT)
(72) Inventor: Marino, Paolo, 40055 Castenaso (Prov. of Bologna) (IT)
(74) Representative: Modiano, Guido, Dr.-Ing.

(57) **Abstract**

A capacitor provided with an overpressure explosion-preventing device, comprising a package (1) which accommodates a self-healing plastic film capacitive element (4) having two opposite heads (6,7) on which two conductors (8,10) for connection to the capacitive element are soldered; a closure cover (11) is coupled to the package (1) and can expand outward if an overpressure occurs in the package; a central supporting body (19) for quick-coupling electrical contacts is associated with the cover (11), and the contacts comprise terminals which are suitable to receive, on one side, respective conductors for connection to the power supply network which are inserted from outside the package without allowing their extraction and, on the other side, the conductors for connection to the capacitive element, so as to allow their electrical disconnection in case of overpressure in the package; the cover (11) comprises a central region on the outside of which there is the central body (19) and through which the conductors (8,10) for connection to the capacitive element (4) pass hermetically.

## Description

The present invention relates to an electric capacitor made of self-healing metallized plastic film, provided with an overpressure explosion-preventing device.

In the current state of the art, capacitors provided with an explosion-preventing device are known which prevent the explosion of the capacitor when, due to a fault, gas is generated inside the capacitive element, causing a gradual increase in pressure inside the package.

If this pressure increase were not stopped promptly, the capacitor would explode, possibly causing damage to nearby people and equipment.

Currently known explosion-preventing devices are generally based on the principle of interrupting the electric circuit inside the capacitor when the pressure in the package reaches values above which an explosion might occur.

In particular, Italian Patent Application no. BO98U0000006 by the same Applicant proposed a capacitor which comprises an outer package made of plastics which is closed by a cover, also made of plastics, and provided with a deformable part in which the double quick-coupling spring contacts for electrical connection to the capacitive element accommodated in the package are arranged.

When the pressure inside the capacitor increases due to gas generation, the deformable part of the cover, by moving away from the capacitive element, applies a mechanical traction to the internal electrical connection wire, ultimately extracting it from said contact. Problems have been found in such solution as regards the structure of the cover, which does not allow to easily automate the assembly of the capacitor, does not allow to disconnect the conductor for connection to the power supply network if it is necessary to remove the capacitor from the wiring, and does not have four possible points for connection to the network as in current insertion-type terminals which do not have an overpressure explosion-preventing device.

The aim of the present invention is therefore to improve the capacitor of to the above-cited patent application, so as to allow better automation of assembly, connection to the power supply network of four wiring conductors, and the possibility to disconnect them if it is necessary to remove the capacitor.

This aim and other objects which will become more apparent hereinafter are achieved with a capacitor provided with an overpressure explosion-preventing device, comprising a package which accommodates a self-healing plastic film capacitive element having two opposite heads on which two conductors for connection to the capacitive element are soldered, a closure cover being coupled to said package, said cover being able to expand outward if an overpressure occurs in said package, a central supporting body for quick-coupling electrical contacts being associated with said cover, said contacts comprising terminals which are suitable to receive, on one side, respective conductors for connection to the power supply network which are inserted from outside the package without allowing their extraction and, on the other side, said conductors for connection to the capacitive element, so as to allow their electrical disconnection in case of overpressure in the package, characterized in that said cover comprises a central region on the outside of which there is said central supporting body and through which said conductors for connection to the capacitive element pass hermetically.

Further characteristics and advantages of the present invention will become apparent from the following detailed description of some embodiments thereof, with reference to the accompanying drawings, wherein:
Figure 1 is a longitudinal sectional view, taken along the plane I-I of Figure 2, of an explosion-preventing capacitor, according to the invention, in the normal operating position;
Figure 2 is a view of a part of the capacitor, turned through 90° with respect to the position of Figure 1;
Figure 3 is a perspective view of a triple-insertion spring contact with two retention contacts toward the outside and an extraction contact toward the inside;
Figure 4 is a longitudinal sectional view of the capacitor in the disconnection position;
Figures 5 and 6 are views of a different embodiment of the capacitor of Figure 1.

With reference to the above figures, the explosion-preventing capacitor comprises a cylindrical package 1 which is composed of a cylindrical wall 2 and of a base 3. A cylindrical capacitive element 4 made of metallized plastic film, wound on a spool 5, is inserted in the package 1. The plates of the element 4 are connected to two heads 6 and 7 made of conducting material which covers the opposite end faces of the element 4.

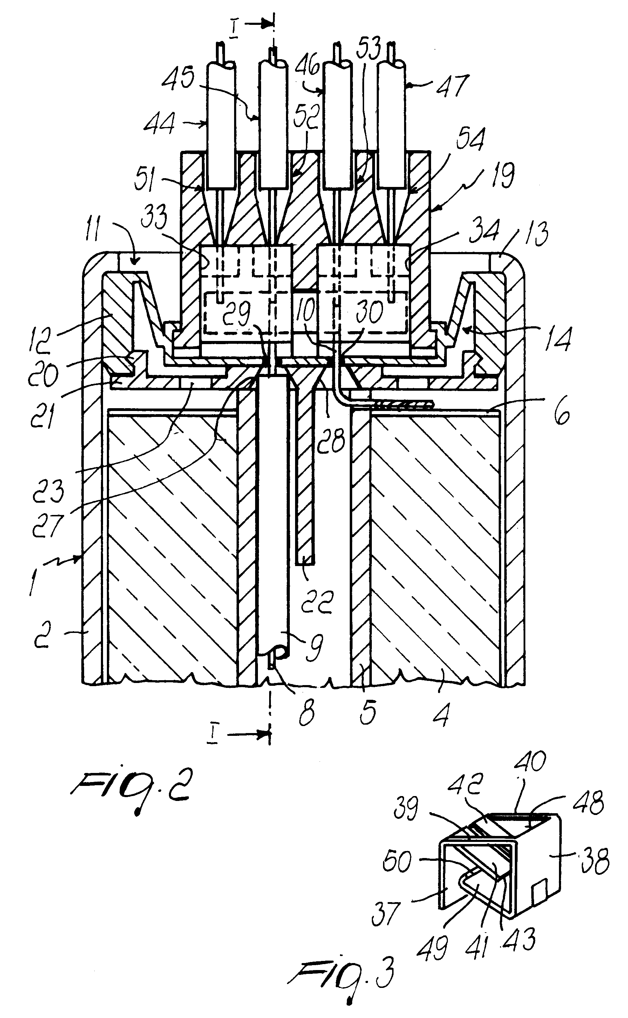

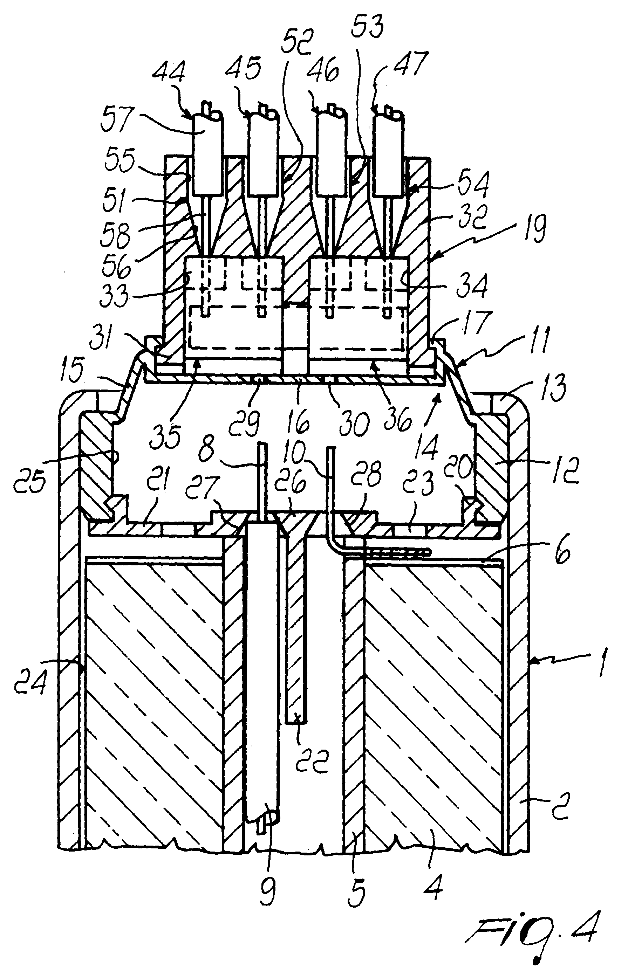

A conductor 8 is connected to the lower head 7 and is protected by a sheath 9 which runs axially along the spool 5 and protrudes from the upper head 6. A conductor 10 is connected to the upper head 6 (see Figures 2 and 3).

The package 1 is closed by a cover 11 which comprises an elastic collar 12 which is inserted hermetically in the package 1 so as to extend below a shoulder 13 thereof formed on the edge of the wall 2.

A flexible diaphragm 14 is fixed to the collar 12 and comprises a conical annular region 15 which surrounds a flat central region 16 which, together with a lip 17, encloses a seat 18. The lip 17 forms an undercut for retaining a central body 19 which is inserted with a snug-fit coupling in the seat 18. The collar 12 is internally provided with an annular slot in which an annular ridge 20, rigidly coupled to a disk 21, is coupled.

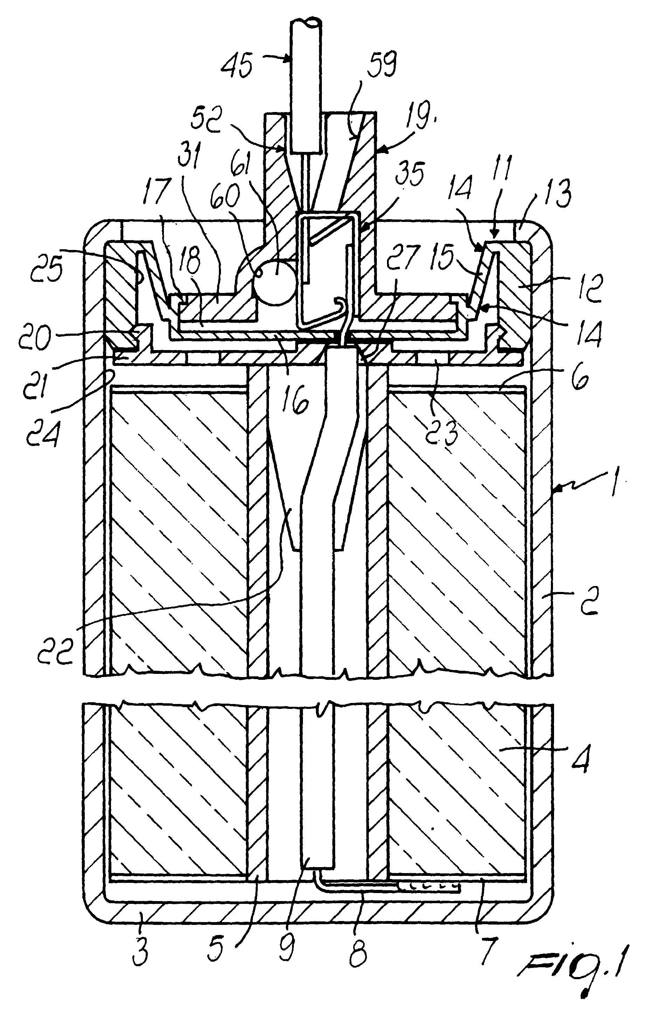

The disk 21 is interposed between the top of the spool 5 and the flat region 16 (see Figures 1 and 2) and has a flat central stem 22 which, by engaging in the spool 5, allows to place the capacitive element 4 in the package 1.

The disk 21 is further provided with a plurality of openings 23 which keep the cavity 24 of the package that accommodates the capacitive element 4 connected to the interspace 25 formed between the disk 21 and the diaphragm 14, so as to keep the pressure between the cavity 24 and the interspace 25 balanced.

In the central region of the disk 21 that faces the spool 5 there is a raised portion 26 which is crossed by conical holes 27, 28 through which the conductors 8 and 10 pass. In particular, the sheath 9 of the conductor 8 abuts against the conical wall of the respective hole 27.

The conductors 8 and 10 are driven through two holes 29, 30 of the central region 16 of the diaphragm 14 in order to provide the connection to contacts for connecting the capacitive element 4 to the outside. According to a fundamental prerogative of the present invention, the passage of the conductors 8 and 10 through the holes 29, 30 is pressure-tight with respect to the outside by way of the mutually interfering diameters of the holes and of said conductors that pass through them.

The central body 19 comprises a flange 31 which is snugly fitted in the seat 18 and surrounds a block 32 (see Figure 4). Two seats 33, 34 are formed in the block 32 and are open toward the flat region 16; two respective mutually identical spring contacts 35, 36 of the triple quick-coupling type are inserted therein.

The spring contacts 35, 36, one of which is shown in particular in Figure 3, are each obtained from a rectangular lamina made of conducting metal, folded over so as to form two parallel portions 37 and 38 which are mutually connected by two bridges 39 and 40 between which there are two tabs 41 and 42 which are formed by blanking and folding the portion of the lamina between the bridges 41 and 42 and have a sharp front edge 43.

The tabs 41 and 42 of the two spring contacts 35 and 36 are folded inward and form, together with the portion 38, four retained-coupling insertion terminals for four possible wires 44, 45, 46, 47 for connection to the capacitor power supply network. The connection of the wires 44-47 to the terminals occurs through openings 48 delimited by the bridges 39, 40.

A third tab 49 is further connected to the portion 38, is folded parallel to the tabs 41 and 42 and ends with a rounded edge 50. The tab 49 forms, together with the portion 37, a third pull-out connection insertion terminal for the conducting wires 8 and 10 for connection to the capacitive element 4. Once the spring contacts 35 and 36 are inserted in the respective seats 33 and 34, they are retained by the flat region 16 of the diaphragm 14.

Four passage holes 51, 52, 53, 54 are further formed in the central body 19 and lead into the seats 33 and 34 through which the four wires 44-47 for connection to the power supply are guided.

Each hole 51-54 comprises a cylindrical portion 55 (see Figure 4), which continues with a conical portion 56. The conical portions 56 are aligned with the tabs 41, 42 of the two contacts 35, 36. The sheaths 57 of the power supply wires 44-48 are to be inserted in the cylindrical portions 55, whereas the metallic conductors 58 arranged inside the sheaths 57 are to be inserted in the conical portions 56.

In the wall of the passage holes 51-54 there is a lateral slot 59 (see Figure 1) which is directed toward the tab 41,42 and allows, by means of a suitable tool inserted through the slot, to act on contacts 35,36 in order to release the conductors 58 and disengage the wires 44-47.

During normal operation, the capacitor is in the configuration shown in Figures 1 and 2: the diaphragm 14 is turned toward the inside of the package and the conductors 8, 10 are retained between the rounded edge 50 of the tabs 49 and the portion 37 of the two contacts 35, 36. With the capacitor thus preset, electrical connection thereof is provided by inserting the conductors 58 of the wires 44-47 in the respective passage holes 51-54 and by coupling them in the respective contacts 35, 36 between the tabs 41, 42 and the portions 38, where they are effectively retained by the front edge 43 of the tabs 41 and 42 which, by biting into the conductors, prevent their extraction.

In case of an operating anomaly, such as a short circuit with generation of gas inside the capacitor, the pressure inside the package 1 increases until the diaphragm 14 that supports the central body 19 is overturned outward. Accordingly, the conductors 8, 10 are separated from the contacts (see Figure 4). This separation is in fact allowed by the possibility of the conductors 8, 10 to slide between the portion 37 and the rounded edge 50 and in the sealing holes 29, 30 of the flat region 16 of the diaphragm 14. When the conductors 8 and 10 separate, the supply of power to the capacitive element 4 ceases and therefore the generation of gas caused by the operating anomaly is interrupted.

It is evident that the described invention perfectly achieves the intended aim. In particular, the interruption of the power supply no longer occurs, according to the prior art, by breaking the connection of the conductor 8 or 10 to the two heads 6 or 7 or by breaking the conductor 8 or 10 at a weakened region but occurs by extraction of the conductors 8 and 10 from the respective connecting contacts and therefore more reliably and precisely, since extraction of the contacts requires a lower internal pressure than required to produce breakage. Moreover, the pressure-tight seal on the internal wires 8, 10 for connection to the capacitive element 4 by interference in the holes 29, 30 formed in the flat region 16 of the diaphragm 14 allows to avoid the need to provide a seal in the four passage holes 51-54 of the wires 44-47 in the central body 19. In this manner it has been possible to form lateral slots 59 which are adjacent to the holes 51-54 and allow to insert a suitable tool, for example a screwdriver, in order to flex and detach from the conductors 58 the tabs 41, 42, which otherwise, by having a sharp edge, would not allow to pull out the wires 44-47 for connection to the power supply network.

The described capacitor is susceptible of numerous modifications and variations, all of which are within the scope of the same inventive concept.

Figures 1, 2 and 4 are views of an embodiment in which in the central body 19 there is a compartment 60 for accommodating a resistor 61 which is connected laterally on the contacts 35, 36 in parallel to the capacitive element 4.

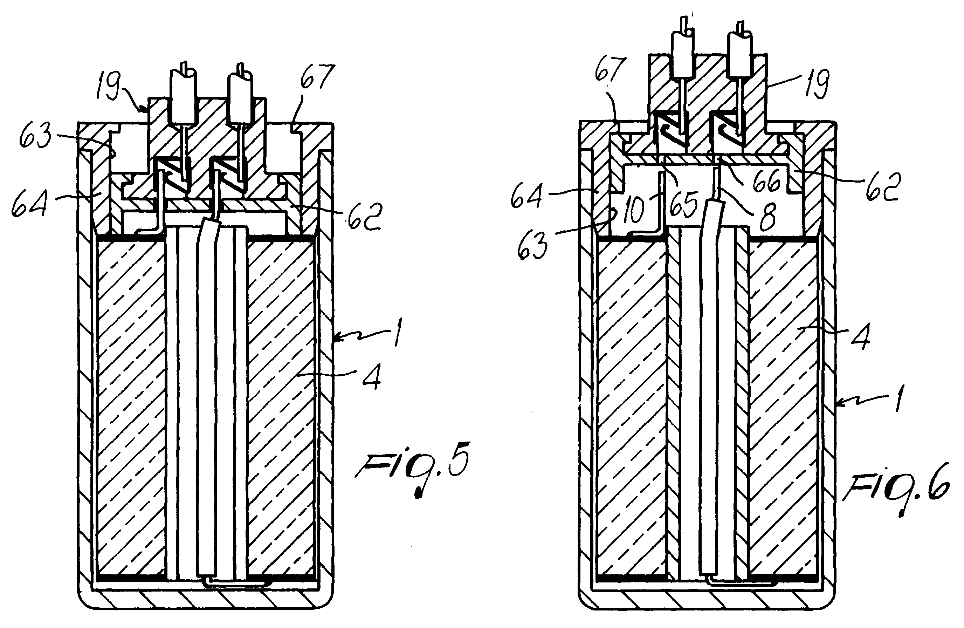

Figures 5 and 6 illustrate another embodiment of the invention, in which the central body 19 is allowed to move by coupling it in a piston 62 which is guided hermetically in a seat 63 of a ring 64 which is in turn inserted in the package 1. In a manner similar to what has already been described for the preceding embodiment, the conductors 8, 10 are hermetically guided in holes 65, 66 of the piston 62, so that in case of overpressure the conductors 8, 10 disengage from the internal contacts 35, 36. In this case, the movable piston 62 stops at a step 67 that is present inside the ring 64.

The disclosures in Italian Patent Application No. BO99A000172 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A capacitor provided with an overpressure explosion-preventing device, comprising a package which accommodates a self-healing plastic film capacitive element having two opposite heads on which two conductors for connection to the capacitive element are soldered, a closure cover being coupled to said package, said cover being able to expand outward if an overpressure occurs in said package, a central supporting body for quick-coupling electrical contacts being associated with said cover, said contacts comprising terminals which are suitable to receive, on one side, respective conductors for connection to the power supply network which are inserted from outside the package without allowing their extraction and, on the other side, said conductors for connection to the capacitive element, so as to allow their electrical disconnection in case of overpressure in the package, characterized in that said cover comprises a central region on the outside of which there is said central body and through which said conductors for connection to the capacitive element pass hermetically.

2. The capacitor according to claim 1, characterized in that said cover comprises an elastic collar which is retained in said package and to which a diaphragm is attached, said diaphragm being able to expand outward and comprising a flexible conical annular region which surrounds a flat central region which forms a seat for the snug-fit retention of said central body, said region being provided with holes through which said conductors for connection to said capacitive element pass hermetically.

3. The capacitor according to claim 2, characterized in that a disk is internally rigidly coupled to said collar and is provided with a plurality of openings which keep the cavity of said package that accommodates said capacitive element connected to an interspace formed between said disk and said diaphragm, said disk being further provided with passage holes for said conductors for connection to the capacitive element, said openings and said holes being suitable to allow the passage of gases when an overpressure occurs.

4. The capacitor according to claim 1, characterized in that said cover is constituted by a piston which is guided in a pressure-tight manner in said package and on which said central body is rigidly coupled, said piston being provided with holes through which said conductors for connection to said capacitive element pass hermetically.

5. The capacitor according to claim 1, characterized in that said central body comprises a pair of triple quick-coupling spring contacts made of conducting metal which comprise two insertion terminals adapted to receive and retain two respective conductors for connection to the power supply network and a coupling terminal toward the inside of the package which is adapted to detachably receive a respective conductor for connection to the capacitive element.

6. The capacitor according to one or more of the preceding claims, characterized in that the passage holes for the wires for connection to the power supply through said central body are provided with lateral slots through which a tool is insertable which is suitable to act on the terminals of said contacts in order to release the connection wire conductors and allow their disengagement.
